# EUROPEAN PATENT APPLICATION

(11) **EP 3 151 449 A1**
(43) Date of publication of application: **05.04.2017**
(21) Application number: 14895313.6
(22) Date of filing: 20.06.2014
(51) Int. Cl.: H04B 7/12

(54) **SIGNAL PROCESSING COMMUNICATION SYSTEM, SIGNAL PROCESSING COMMUNICATION APPARATUS, AND BASE STATION**

(71) Applicant: Huawei Technologies Co. Ltd., Shenzhen, Guangdong 518129 (CN)
(72) Inventor: HUANG, Huang, Shenzhen Guangdong 518129 (CN); WANG, Guangjian, Shenzhen Guangdong 518129 (CN); WANG, Tianxiang, Shenzhen Guangdong 518129 (CN)
(74) Representative: Gill Jennings & Every LLP
(86) International application number: PCT/CN2014/080408
(87) International publication number: WO 2015/192373

(57) **Abstract**

The present invention provides a signal processing communications system, a signal processing communications apparatus, and a base station, where a radio frequency switch closes under the control of a control signal sent by a digital interface, so that a digital processing unit is connected to a power combiner, and modulated signals that are corresponding to one or more sub-bands and obtained by the digital processing unit are input to the power combiner. Finally, the power combiner superimposes the modulated signals that are corresponding to one or more sub-bands and output by the radio frequency switch, and inputs a superimposed modulated signal to a corresponding antenna. With an increase in a quantity of antennas, there is only a need to increase a quantity of radio frequency switches and a quantity of power combiners, and there is no need to increase a quantity of digital processing units, thereby reducing costs.

## Description

### TECHNICAL FIELD

The present invention relates to wireless communications technologies, and in particular, to a signal processing communications system, a signal processing communications apparatus, and a base station.

### BACKGROUND

With development of communications technologies, current wireless communications technologies have stepped into a Gigabit era. Because a millimetric wave can provide extremely wide bandwidth, the millimetric wave is gradually playing a leading role in a Gigabit wireless system market. Because an E-Band in the millimetric wave has 10 GHz (71-76, 81-86 GHz) bandwidth and much less atmospheric fading, the E-Band is preferred in a long-distance high-speed wireless point-to-point system of a Gigabit wireless system. A transmission rate supported by the entire E-band may reach hundreds of Gbps. In a practical base station application, a rate that can be processed by an entire high frequency band needs to be allocated to multiple different sectors (directions) of an antenna according to needs.

In a solution of the prior art, bandwidth allocation and rate allocation are controlled by a field-programmable gate array (Field-Programmable Gate Array, FPGA for short) component and a radio frequency component, and on-demand allocation of rates is implemented by allocating a quantity of FPGAs and a quantity of radio frequency components that are needed by an antenna. For example, one antenna corresponds to 10 GHZ E-BAND bandwidth; if the 10 GHZ is divided into ten sub-bandwidths, and each sub-bandwidth needs one FPGA and one radio frequency component for processing, one antenna corresponds to ten FPGAs and ten radio frequency components. In a practical application, if there are two antennas, 20 FPGAs and 20 radio frequency components are needed.

However, if the foregoing method is used to control bandwidth allocation and rate allocation, with an increase in a quantity of antennas, a quantity of FPGAs and a quantity of radio frequency components increase accordingly, thereby causing a problem of high base station costs and complexities.

### SUMMARY

Embodiments of the present invention provide a signal processing communications system, a signal processing communications apparatus, and a base station, so as to resolve a prior-art problem of high base station costs and complexities.

A first aspect of the present invention provides a signal processing communications apparatus, including a radio frequency switch and a power combiner, where
the radio frequency switch is configured to close under the control of a control signal sent by a digital interface, so that a digital processing unit is connected to the power combiner, and modulated signals that are corresponding to one or more sub-bands and obtained by the digital processing unit are input to the power combiner; and
the power combiner is configured to superimpose the modulated signals that are corresponding to one or more sub-bands and output by the radio frequency switch, and input a superimposed modulated signal to a corresponding antenna.

In a first possible implementation manner of the first aspect, there is one antenna, and there is one power combiner; and
the radio frequency switch includes multiple single-pole single-throw switch components, where an input end of each single-pole single-throw switch component is connected to the digital processing unit, and an output end of each single-pole single-throw switch component is connected to the power combiner.

In a second possible implementation manner of the first aspect, there is one antenna, and there are multiple power combiners; and
the radio frequency switch includes multiple single-pole multi-throw switch components, where an input end of each single-pole multi-throw switch component is connected to the digital processing unit, and each output end of each single-pole multi-throw switch component is connected to the multiple power combiners.

In a third possible implementation manner of the first aspect, there are at least two antennas, and each antenna corresponds to one power combiner; and
the radio frequency switch includes multiple single-pole single-throw switch components, where an input end of each single-pole single-throw switch component is connected to the digital processing unit, and an output end of each single-pole single-throw switch component is connected to the power combiner corresponding to the signal modulation unit.

In a fourth possible implementation manner of the first aspect, there are at least two antennas, and each antenna corresponds to multiple power combiners; and
the radio frequency switch includes multiple single-pole multi-throw switch components, where an input end of each single-pole multi-throw switch component is connected to the digital processing unit, and an output end of each single-pole multi-throw switch component is connected to multiple power combiners corresponding to the signal modulation unit.

A second aspect of the present invention provides a signal processing communications system, where system bandwidth includes multiple sub-bands, and the system includes: a digital interface, at least one digital processing unit, a combiner unit, and at least one antenna, where
the digital interface is configured to generate multiple baseband signals, where each baseband signal corresponds to one of the sub-bands; and is further configured to determine a sub-band corresponding to each antenna and output a control signal to the combiner unit;
the digital processing unit is configured to separately modulate the multiple baseband signals generated by the digital interface, where a modulated signal is obtained after each baseband signal is modulated;
the combiner unit is configured to: according to the control signal sent by the digital interface, superimpose modulated signals that are corresponding to one or more sub-bands and obtained by the digital processing unit, and input a superimposed modulated signal to a corresponding antenna; and
the antenna is configured to transmit the modulated signal output by the combiner unit.

In a first possible implementation manner of the second aspect, the combiner unit includes:
a radio frequency switch, configured to close under the control of the control signal sent by the digital interface, so that the digital processing unit is connected to the power combiner, and the modulated signals that are corresponding to one or more sub-bands and obtained by the digital processing unit are input to the power combiner; and
the power combiner, configured to superimpose the modulated signals that are corresponding to one or more sub-bands and output by the radio frequency switch, and input the superimposed modulated signal to the corresponding antenna.

With reference to the first possible implementation manner of the second aspect, in a second possible implementation manner of the second aspect, the system includes one antenna, and there is one power combiner; and
the radio frequency switch includes multiple single-pole single-throw switch components, where an input end of each single-pole single-throw switch component is connected to the digital processing unit, and an output end of each single-pole single-throw switch component is connected to the power combiner.

With reference to the first possible implementation manner of the second aspect, in a third possible implementation manner of the second aspect, the system includes one antenna, and there are multiple power combiners; and
the radio frequency switch includes multiple single-pole multi-throw switch components, where an input end of each single-pole multi-throw switch component is connected to the digital processing unit, and each output end of each single-pole multi-throw switch component is connected to the multiple power combiners.

With reference to the first possible implementation manner of the second aspect, in a fourth possible implementation manner of the second aspect, the system includes at least two antennas, and each antenna corresponds to one power combiner; and
the radio frequency switch includes multiple single-pole single-throw switch components, where an input end of each single-pole single-throw switch component is connected to the digital processing unit, and an output end of each single-pole single-throw switch component is connected to the power combiner corresponding to the signal modulation unit.

With reference to the first possible implementation manner of the second aspect, in a fifth possible implementation manner of the second aspect, the system includes at least two antennas, and each antenna corresponds to multiple power combiners; and
the radio frequency switch includes multiple single-pole multi-throw switch components, where an input end of each single-pole multi-throw switch component is connected to the digital processing unit, and an output end of each single-pole multi-throw switch component is connected to multiple power combiners corresponding to the signal modulation unit.

With reference to any one of the second aspect, or the first to the fifth possible implementation manners of the second aspect, in a sixth possible implementation manner of the second aspect, the digital processing unit includes:
a field-programmable gate array FPGA component, configured to separately modulate the multiple baseband signals generated by the digital interface, where a modulated signal is obtained after each baseband signal is modulated; and
a digital-to-analog conversion component, configured to perform digital-to-analog conversion on the modulated signal, so as to obtain an analog signal.

With reference to the sixth possible implementation manner of the second aspect, in a seventh possible implementation manner of the second aspect, the system further includes:
a first band pass filter BPF component, configured to perform filtering on the analog signal obtained by the analog-to-digital conversion component, so as to obtain a first filtered signal; and
a signal amplifier, configured to amplify the first filtered signal obtained by the first BPF component.

With reference to any one of the second aspect, or the first to the seventh possible implementation manners of the second aspect, in an eighth possible implementation manner of the second aspect, the system further includes a second BPF component, where
the second BPF component is configured to perform filtering on the signal that is obtained by superimposing the modulated signals corresponding to one or more sub-bands and that is output by the combiner unit, and input a filtered signal to the corresponding antenna.

A third aspect of the present invention provides a base station, including the system according to any one of the second aspect, or the first to the eighth possible implementation manners of the second aspect.

A fourth aspect of the present invention provides a signal processing communications system, where system bandwidth includes multiple sub-bands, and the system includes: a generation module, a modulation module, a processing module, and at least one antenna, where
the generation module is configured to generate multiple baseband signals, where each baseband signal corresponds to one of the sub-bands; and is further configured to determine a sub-band corresponding to each antenna and output a control signal to the processing module;
the modulation module is configured to separately modulate the multiple baseband signals generated by the generation module, where a modulated signal is obtained after each baseband signal is modulated;
the processing module is configured to: according to the control signal sent by the generation module, superimpose modulated signals that are corresponding to one or more sub-bands and obtained by the modulation module, and input a superimposed modulated signal to a corresponding antenna; and
the antenna is configured to transmit the modulated signal output by the processing module.

In a first possible implementation manner of the fourth aspect, the modulation module includes:
a modulation unit, configured to separately modulate the multiple baseband signals generated by the generation module, where a modulated signal is obtained after each baseband signal is modulated; and
a digital-to-analog conversion unit, configured to perform digital-to-analog conversion on the modulated signal, so as to obtain an analog signal.

With reference to the first possible implementation manner of the fourth aspect, in a second possible implementation manner of the fourth aspect, the system further includes:
a first filtering unit, configured to perform filtering on the analog signal obtained by the digital-to-analog conversion unit, so as to obtain a first filtered signal; and
a signal amplification unit, configured to amplify the first filtered signal obtained by the filtering unit.

With reference to the fourth aspect or the first or the second possible implementation manner of the fourth aspect, in a third possible implementation manner of the fourth aspect, the system further includes a second filtering unit, where
the second filtering unit is configured to perform filtering on the signal that is obtained by superimposing the modulated signals corresponding to one or more sub-bands and that is output by the processing module, and input a filtered signal to the corresponding antenna.

A fifth aspect of the present invention provides a base station, including the system according to any one of the fourth aspect, or the first to the third possible implementation manners of the fourth aspect.

The present invention provides a signal processing communications system, a signal processing communications apparatus, and a base station, including a radio frequency switch and a power combiner, where the radio frequency switch closes under the control of a control signal sent by a digital interface, so that a digital processing unit is connected to the power combiner, and modulated signals that are corresponding to one or more sub-bands and obtained by the digital processing unit are input to the power combiner. Finally, the power combiner superimposes the modulated signals that are corresponding to one or more sub-bands and output by the radio frequency switch, and inputs a superimposed modulated signal to a corresponding antenna. With an increase in a quantity of antennas, there is only a need to increase a quantity of radio frequency switches and a quantity of power combiners, and there is no need to increase a quantity of digital processing units, thereby reducing costs.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic structural diagram of a signal processing communications apparatus according to an embodiment of the present invention;
FIG. 2 is a schematic structural diagram of a signal processing communications system according to an embodiment of the present invention;
FIG. 3 is a schematic structural diagram of a radio frequency switch in a combiner unit according to an embodiment of the present invention, where the radio frequency switch is a single-pole single-throw switch;
FIG. 4 is a schematic structural diagram of a radio frequency switch in a combiner unit according to an embodiment of the present invention, where the radio frequency switch is a single-pole multi-throw switch;
FIG. 5 is a schematic structural diagram of a signal processing communications system according to another embodiment of the present invention;
FIG. 6 is a schematic structural diagram of a signal processing communications system according to still another embodiment of the present invention;
FIG. 7 is a schematic structural diagram of a single-pole single-throw switch according to an embodiment of the present invention;
FIG. 8 is a schematic structural diagram of a single-pole multi-throw switch according to an embodiment of the present invention;
FIG. 9 is a schematic structural diagram of a single-pole single-throw switch according to another embodiment of the present invention;
FIG. 10 is a schematic structural diagram of a single-pole multi-throw switch according to another embodiment of the present invention;
FIG. 11 is a schematic structural diagram of a signal processing communications system according to another embodiment of the present invention; and
FIG. 12 is a schematic structural diagram of a signal processing communications system according to yet another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

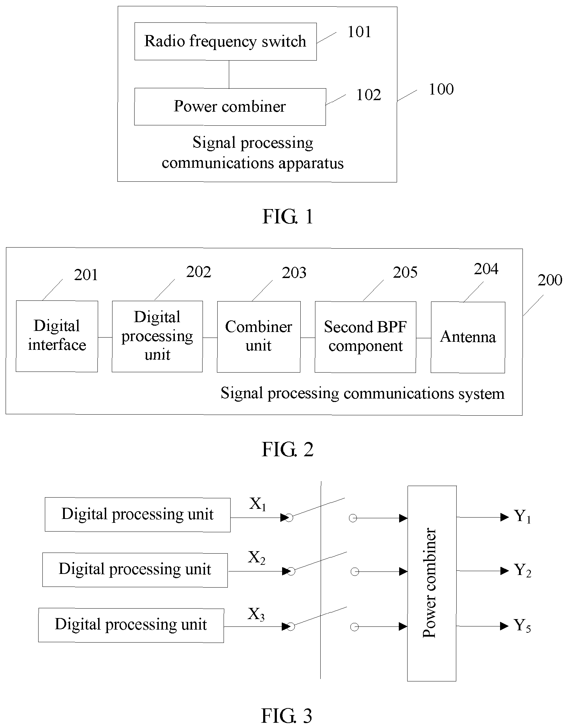

FIG. 1 is a schematic structural diagram of a signal processing communications apparatus according to an embodiment of the present invention. As shown in FIG. 1, the signal processing apparatus 100 includes a radio frequency switch 101 and a power combiner 102. The radio frequency switch 101 is configured to close under the control of a control signal sent by a digital interface, so that a digital processing unit is connected to the power combiner 102, and modulated signals that are corresponding to one or more sub-bands and obtained by the digital processing unit are input to the power combiner 102. The power combiner 102 is configured to superimpose the modulated signals that are corresponding to one or more sub-bands and output by the radio frequency switch 101, and input a superimposed modulated signal to a corresponding antenna.

Optionally, in an embodiment of the present invention, there is one antenna, there is one power combiner, and the radio frequency switch 101 includes multiple single-pole single-throw switch components. An input end of each single-pole single-throw switch component is connected to the digital processing unit, and an output end of each single-pole single-throw switch component is connected to the power combiner 102.

Optionally, in another embodiment of the present invention, there is one antenna, there are multiple power combiners, and the radio frequency switch 101 includes multiple single-pole multi-throw switch components. An input end of each single-pole multi-throw switch component is connected to the digital processing unit, and an output end of each single-pole multi-throw switch component is connected to the multiple power combiners 102.

Optionally, in still another embodiment of the present invention, there are at least two antennas, each antenna corresponds to one power combiner 102, and the radio frequency switch 101 includes multiple single-pole single-throw switch components. An input end of each single-pole single-throw switch component is connected to the digital processing unit, and an output end of each single-pole single-throw switch component is connected to a power combiner 102 corresponding to a signal modulation unit.

Optionally, in yet another embodiment of the present invention, there are at least two antennas, each antenna corresponds to multiple power combiners 102, and the radio frequency switch 101 includes multiple single-pole multi-throw switch components. An input end of each single-pole multi-throw switch component is connected to the digital processing unit, and an output end of each single-pole multi-throw switch component is connected to multiple power combiners 102 corresponding to a signal modulation unit.

Specifically, when a digital interface unit generates multiple baseband signals, and determines, according to a manner that brings a minimum system interruption probability or according to a manner that brings minimum total system power, a sub-band of an antenna by using which a baseband signal may be transmitted. The digital interface inputs the multiple generated baseband signals to the digital processing unit, so that the digital processing unit modulates the baseband signals. Then, the radio frequency switch 101 closes under the control of the control signal sent by the digital interface, and switches signals that are modulated by the digital processing unit to a power combiner 102 corresponding to the antenna sub-band. The power combiner 102 superimposes multiple signals that are in a same antenna direction and are modulated by the digital processing unit, and inputs a superimposed modulated signal to a corresponding antenna direction to transmit the signal by using the antenna. When there is one antenna and there are sub-bands in three different directions that may be used for signal transmission, in this case, three digital processing units are needed to modulate the baseband signals generated by the digital interface, because only one direction of the antenna may be selected to transmit a signal that is modulated by each digital processing unit. However, multiple antennas may select a same direction to transmit a signal. When there are two antennas and there are also sub-bands in three directions that may be used for signal transmission, because only one direction of one antenna may be selected to transmit a signal modulated by a digital processing unit and because there are three directions, in this case, only three digital processing units are needed as well to modulate the baseband signals generated by the digital interface. Under a premise that a quantity of sub-bands of an antenna that are used to transmit a signal does not change, a quantity of digital processing units does not increase with an increase in a quantity of antennas, so that costs can be reduced.

The signal processing apparatus provided in this embodiment of the present invention includes a radio frequency switch and a power combiner, where the radio frequency switch closes under the control of a control signal sent by a digital interface, so that a digital processing unit is connected to a power combiner, and modulated signals that are corresponding to one or more sub-bands and obtained by the digital processing unit are input to the power combiner. Finally, the power combiner superimposes the modulated signals that are corresponding to one or more sub-bands and output by the radio frequency switch, and inputs a superimposed modulated signal to a corresponding antenna. With an increase in a quantity of antennas, there is no need to increase a quantity of digital processing units, so that costs of a base station are reduced.

FIG. 2 is a schematic structural diagram of a signal processing communications system according to an embodiment of the present invention, where system bandwidth includes multiple sub-bands. As shown in FIG. 2, the signal processing communications system 200 includes: a digital interface 201, at least one digital processing unit 202, a combiner unit 203, and at least one antenna 204, where
the digital interface 201 is configured to generate multiple baseband signals, where each baseband signal corresponds to one of the sub-bands; and is further configured to determine a sub-band corresponding to each antenna 204 and output a control signal to the combiner unit 203;
the digital processing unit 202 is configured to separately modulate the multiple baseband signals generated by the digital interface 201, where a modulated signal is obtained after each baseband signal is modulated;
the combiner unit 203 is configured to: according to the control signal sent by the digital interface 201, superimpose modulated signals that are corresponding to one or more sub-bands and obtained by the digital processing unit 202, and input a superimposed modulated signal to a corresponding antenna 204; and
the antenna 204 is configured to transmit the modulated signal output by the combiner unit 203.

Specifically, when multiple users communicate with a base station in a system, system bandwidth needs to be divided into different sub-bands, each sub-band corresponds to one user, and the system transmits data for a user by using a sub-band corresponding to the user. For example, when the system bandwidth is 10 GHZ, if there are five users who communicate with the base station in the system, the system bandwidth may be equally allocated to the five users, that is, the system bandwidth is divided into five 2 GHZ sub-bands for communication. The system bandwidth may also be divided into five sub-bands according to a manner that brings a minimum system interruption probability, or may be allocated according to bandwidth that brings minimum total system power. The present invention sets no limitation on a manner of dividing system bandwidth.

After the system divides the system bandwidth into different sub-bands according to a need, each sub-band corresponds to one digital processing unit 202, where the digital processing unit 202 is configured to modulate a signal transmitted in a corresponding sub-band to a signal that meets a requirement of the system. Further, the digital processing unit 202 may include: a field-programmable gate array (Field-Programmable Gate Array, FPGA for short) component and a digital-to-analog conversion component, where
the FPGA component is configured to separately modulate the multiple baseband signals generated by the digital interface 201, where a modulated signal is obtained after each baseband signal is modulated; and
the digital-to-analog conversion component is configured to perform digital-to-analog conversion on the modulated signal, so as to obtain an analog signal.

Further, the digital processing unit 202 further includes a first band pass filter (Band Pass Filter, BPF for short) component and a signal amplifier, where the first BPF component is configured to perform filtering on the analog signal obtained by the digital-to-analog conversion component, so as to obtain a first filtered signal; and
the signal amplifier is configured to amplify the first filtered signal obtained by the first BPF component.

Further, the combiner unit 203 in the foregoing signal processing communications system 200 may further include a radio frequency switch and a power combiner. The radio frequency switch is configured to close under the control of the control signal sent by the digital interface 201, so that the digital processing unit 202 is connected to the power combiner, and the modulated signals that are corresponding to one or more sub-bands and obtained by the digital processing unit 202 are input to the power combiner. The power combiner is configured to superimpose the modulated signals that are corresponding to one or more sub-bands and output by the radio frequency switch, and input the superimposed modulated signal to the corresponding antenna 204.

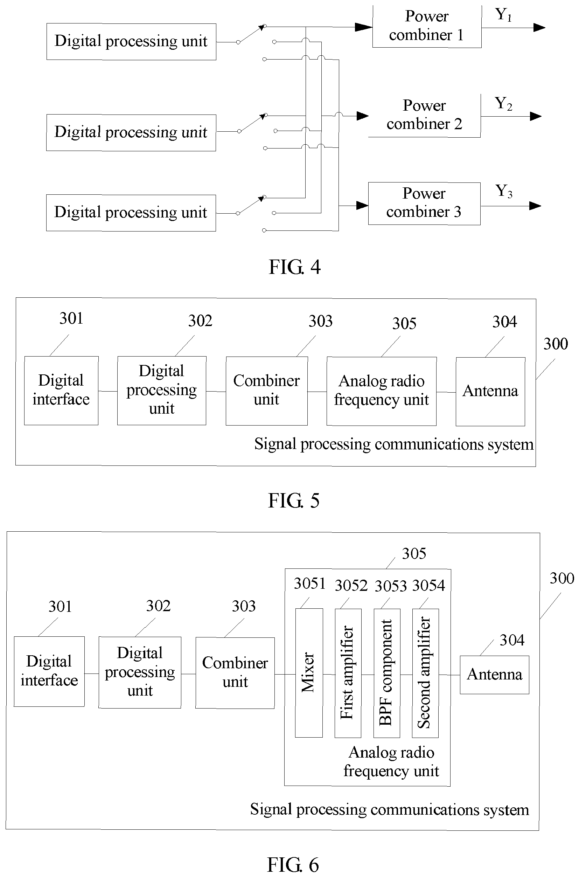

For example, as shown in FIG. 3, an antenna system of a base station has sub-bands in three directions that are used to transmit a signal, which are Y₁, Y₂, and Y₃ directions respectively. When a radio frequency switch in a combiner unit is a single-pole single-throw switch, there are three single-pole single-throw switches that are X₁, X₂, and X₃ respectively, and there is one power combiner, an input end of each single-pole single-throw switch is connected to one digital processing unit, an output end of the single-pole single-throw switch is connected to the power combiner. Moreover, an output end of the power combiner is connected to the sub-bands in the directions of the antenna, that is, the power combiner has three output ends that are respectively configured to connect to the Y₁, Y₂, and Y₃ directions of the antenna. As shown in FIG. 4, an antenna system of a base station has sub-bands in three directions that are used to transmit a signal, which are Y₁, Y₂, and Y₃ directions respectively. When a radio frequency switch in a combiner unit is a single-pole multi-throw switch, there are three single-pole multi-throw switches, and there are three power combiners, an input end of each single-pole multi-throw switch is connected to one digital processing unit, an output end of the single-pole multi-throw switch is connected to one power combiner, and an output end of the power combiner is connected to a sub-band in one direction of the antenna. That is, each power combiner can transmit only one signal, and the three power combiners correspond to the sub-bands in the three different directions of the antenna.

Further, it is assumed that total bandwidth of the system is 10 GHZ, and the total bandwidth is divided into ten different sub-bands, bandwidth of each sub-band is the same, that is, the total bandwidth is divided into ten 1 GHZ sub-bands, each sub-band corresponds to one digital processing unit, each antenna has sub-bands in ten different directions that are used to transmit sub-bands divided by the system, and there is a single antenna in each direction, that is, a sub-band in one direction corresponds to one antenna. In this case, each antenna corresponds to ten digital processing units that modulate signals transmitted in the sub-bands. When a sub-band in each direction is a dual antenna, that is, a sub-band in one direction corresponds to two antennas, in the prior art, each antenna needs to correspond to a whole sub-band. That is, there are ten sub-bands in the system, and each antenna needs ten digital processing units to modulate the signals transmitted in the sub-bands. Because there are two antennas, in this case, the system needs 20 digital processing units to modulate the signals transmitted in the sub-bands. That is, in the prior art, a quantity of digital processing units increases with an increase in a quantity of antennas. However, in this embodiment of the present invention, because the total bandwidth is divided into the ten 1 GHZ sub-bands, and each sub-band corresponds to one digital processing unit, only ten digital processing units are needed to modulate signals in the corresponding sub-bands. That is, in this embodiment of the present invention, in a case in which a quantity of sub-bands does not change, a quantity of digital processing units does not change and does not increase with an increase in a quantity of antennas, so that costs can be effectively reduced.

Further, as shown in FIG. 2, the foregoing signal processing communications system 200 may further include a second BPF component 205, which is configured to perform filtering on the signal that is obtained by superimposing the modulated signals corresponding to one or more sub-bands and that is output by the combiner unit 203, and input a filtered signal to the corresponding antenna 204.

Specifically, because a transmission band of a combined signal obtained after processing performed by the combiner unit 203 changes, a modulated signal processed by the combiner unit 203 is first modulated by using a mixer to a frequency band that is suitable for the antenna 204 in the system to transmit. A mixed signal includes a noise signal. The second BPF component 205 performs filtering processing on the mixed signal, so as to filter out the noise signal in the mixed signal and obtain a second filtered signal. Finally, the second filtered signal that is obtained after filtering processing of the second BPF component 205 is amplified and is transmitted by using the antenna 204.

Further, the FPGA component in the digital processing unit 202 is configured to modulate a baseband signal, so as to obtain a modulated signal. The modulation may be single-carrier modulation or multi-carrier modulation. The single carrier modulation is modulating, to a single carrier for transmission, a data stream that needs to be transmitted, for example, quadrature amplitude modulation (Quadrature Amplitude Modulation, QAM for short). The multi-carrier modulation is dividing a channel into orthogonal sub-channels, converting a high-speed data signal into parallel low-speed sub-data streams, and then modulating the parallel low-speed sub-data streams to the sub-channels for transmission, for example, n-coded orthogonal frequency division multiplexing (n-coded orthogonal frequency division multiplexing, n-COFDM for short) modulation, where n is a quantity of subcarriers. The present invention sets no limitation on a modulation manner.

In addition, the modulation of the baseband signal may be at least one of the following modulation manners: channel coding, orthogonal frequency division multiplexing (Orthogonal Frequency Division Multiplexing, OFDM for short) modulation, pulse shaping, sample rate conversion, pre-emphasis, pre-equalization, peak-to-average ratio suppression, and the like. The channel coding refers to adding some elements to a bitstream of source data to achieve a purpose of performing error identification and error correction at a receive end, so that data transmission efficiency can be improved and a bit error rate can be reduced. The OFDM modulation is dividing a channel into orthogonal sub-channels, converting a high-speed data signal into parallel low-speed sub-data streams, and modulating the parallel low-speed sub-data streams to the sub-channels for transmission. The pulse shaping is used to reduce amplitude interference caused by signal multipath reflection. The sample rate conversion is used to reduce a storage capacity, so that different systems are compatible with each other. The pre-emphasis refers to using a difference between a signal characteristic and a noise characteristic to effectively process a signal, so as to effectively improve an output signal-to-noise ratio. The pre-equalization is used to maintain good orthogonality between signals. The peak-to-average ratio suppression is used to avoid signal distortion and orthogonality destruction when multiple sub-channel signals are superimposed. The present invention sets no limitation on a modulation manner of the baseband signal.

Further, the digital-to-analog conversion component is configured to perform digital-to-analog conversion on a signal that needs to be modulated, so as to obtain an analog signal. Because a wanted signal in the analog signal may be submerged in interference noise, the first BPF component is required according to a need to perform frequency selection on the analog signal, so as to filter out the interference noise and obtain the wanted signal. Then, the mixer performs mixing processing on the analog signal that is filtered by the first BPF component. Before being sent to the combiner unit 203, the analog signal output by the mixer undergoes secondary filtering processing performed by a BPF2 component performs secondary filtering processing and then undergoes amplification processing performed by the amplifier.

The combiner unit 203 receives the modulated signal that is modulated by the digital processing unit and receives the control signal sent by the digital interface. The control signal is used to determine, according to a total transmit power of the antenna or whether the antenna is idle, a transmit antenna corresponding to each signal modulated by the signal processing unit and a transmit direction of a corresponding antenna. Each modulated signal may be switched to a corresponding power combiner by using the control signal that controls the radio frequency switch to close. The power combiner combines modulated signals in a same transmit direction of the antenna and sends a combined signal to the second BPF component 205. After performing filtering processing on the combined signal output by the combiner unit 203, the second BPF component 205 inputs the combined signal to the antenna 204.

This embodiment provides a signal processing communications system, where system bandwidth includes multiple sub-bands, and the system includes: a digital interface, at least one digital processing unit, a combiner unit, and at least one antenna. The digital interface generates multiple baseband signals, where each baseband signal corresponds to one of the sub-bands, and determines a sub-band corresponding to each antenna and outputs a control signal to the combiner unit. Further, the digital processing unit separately modulates the multiple baseband signals generated by the digital interface, where a modulated signal is obtained after each baseband signal is modulated. Then, according to the control signal sent by the digital interface, the combiner unit superimposes modulated signals that are corresponding to one or more sub-bands and obtained by the digital processing unit, and inputs a superimposed modulated signal to a corresponding antenna. Finally, the antenna transmits the modulated signal output by the combiner unit. The combiner unit superimposes the modulated signals that are corresponding to one or more sub-bands and obtained by the digital processing unit, and inputs the superimposed modulated signal to the corresponding antenna. In addition, with an increase in a quantity of antennas, there is no need to increase a quantity of signal modulation units, so that base station costs and complexities can be reduced.

FIG. 5 is a schematic structural diagram of a signal processing communications system according to another embodiment of the present invention. Total bandwidth of the system is 5 GHz and is equally divided into six sub-bands, that is, bandwidth of each sub-band is 5/6 GHz, and each sub-band corresponds to one digital processing unit.

As shown in FIG. 5, the signal processing communications system 300 includes: a digital interface 301, a digital processing unit 302, a combiner unit 303, and an antenna 304, where
the digital interface 301 equally divides the 5 GHz total bandwidth into six sub-bands, where bandwidth of each sub-band is 5/6 GHz, and each sub-band corresponds to one digital processing unit 202.

Further, each digital processing unit 302 includes an FPGA component, a digital-to-analog conversion component, a BPF1 component, a mixer, a BPF2 component, and an amplifier. The FPGA component is configured to modulate a baseband signal. The digital-to-analog conversion component is configured to convert, into an analog signal, a digital signal modulated by the FPGA component. The BPF1 component is configured to perform filtering processing on the analog signal that is obtained through conversion performed by the digital-to-analog conversion component. The mixer is configured to perform mixing processing on the signal that is filtered by the BPF1 component. The BPF2 component is configured to perform secondary filtering processing on the signal that has undergone mixing processing performed by the mixer. The amplifier is configured to amplify the signal that has undergone secondary filtering processing performed by the BPF2 component, and input the amplified signal to the combiner unit 303.

Further, the combiner unit 303 includes a radio frequency switch and a power combiner. The radio frequency switch is configured to close under the control of a control signal sent by the digital interface, so that modulated signals that are corresponding to one or more sub-bands and obtained by the digital processing unit 302 are input to a corresponding power combiner. The power combiner is configured to superimpose the modulated signals that are corresponding to one or more sub-bands and output by the radio frequency switch, and input a superimposed modulated signal to a corresponding antenna 304.

Further, as shown in FIG. 5, the signal processing communications system 300 further includes an analog radio frequency unit 305. The analog radio frequency unit 305 is configured to: before the antenna 304 transmits the modulated signal that is superimposed by the power combiner in the combiner unit 303, process the superimposed modulated signal that is output by the power combiner. Specifically, as shown in FIG. 6, the foregoing analog radio frequency unit 305 includes: a mixer 3051, a first amplifier 3052, a BPF component 3053, and a second amplifier 3054. The mixer 3051 is configured to up-convert the superimposed modulated signal that is output by the power combiner in the combiner unit 303 to a frequency band that is suitable for the antenna to transmit. The first amplifier 3052 is configured to amplify the up-converted signal. The BPF component is configured to filter out noise in the signal that is amplified by the first amplifier. The second amplifier 3053 is configured to amplify the signal that is filtered by the BPF component 3052 and input the signal to the corresponding antenna 304.

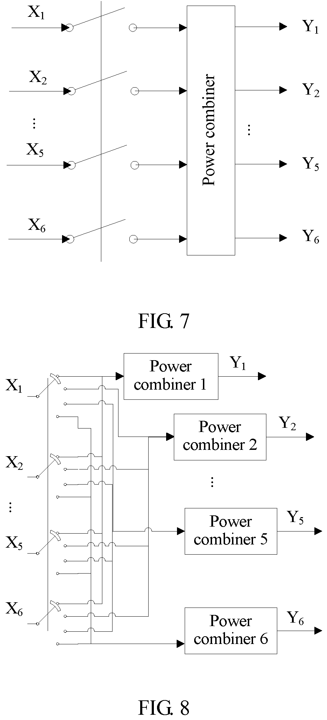

Optionally, in an embodiment of an implementation scenario in which there is one antenna, the radio frequency switch in the combiner unit 303 may be a single-pole single-throw switch shown in FIG. 7. There are six single-pole single-throw switches, and there is one power combiner. An input end of each single-pole single-throw switch is connected to one digital processing unit 302, and an output end of each single-pole single-throw switch is connected to the power combiner. In FIG. 7, X₁, X₂, ..., X₅, and X₆ are analog signals obtained after the digital processing unit 302 processes digital signals generated by the digital interface, and Y₁, Y₂, ..., Y₅, and Y₆ separately correspond to a sub-band in one direction of the antenna.

For example, after being modulated by the digital processing unit, the signal X₁ and the signal X₂ need to be transmitted by using a sub-band in a Y₅ direction of the antenna, and the modulated signal X₃ and the modulated signal X₅ need to be transmitted by using a sub-band in a Y₄ direction of the antenna. In this case, under the control of the control signal sent by the digital interface, the radio frequency switch switches the modulated signal X₁ and the modulated signal X₂ to the sub-band corresponding to the Y₅ direction, and switches the modulated signal X₃ and the modulated signal X₅ to the sub-band corresponding to the Y₄ direction. Then, the power combiner combines the modulated signal X₁ and the modulated signal X₂ that need to be transmitted by using the sub-band corresponding to the Y₅ direction, that is, recombines and inputs the modulated signal X₁ and the modulated signal X₂ to the sub-band corresponding to the Y₅ direction; and combines the modulated signal X₃ and the modulated signal X₅ that need to be transmitted by using the sub-band corresponding to the Y₄ direction, that is, recombines and inputs the modulated signal X₃ and the modulated signal X₅ to the sub-band corresponding to the Y₄ direction. It should be noted that only a sub-band in one direction of the antenna may be selected to transmit each modulated signal, but a sub-band in a same direction of the antenna may be selected to transmit different modulated signals.

Optionally, in another embodiment of an implementation scenario in which there is one antenna, the radio frequency switch in the combiner unit 303 may be a single-pole multi-throw switch shown in FIG. 8, and there are six power combiners. An input end of each single-pole multi-throw switch is connected to one digital processing unit 302, and an output end of each single-pole multi-throw switch is connected to the six power combiners. X₁, X₂, ..., X₅, and X₆ are modulated signals obtained after the digital processing unit 302 processes digital signals generated by the digital interface 301, and Y₁, Y₂, ..., Y₅, and Y₆ separately correspond to a sub-band in one direction of the antenna. Each power combiner corresponds to a sub-band in one direction of the antenna 304.

For example, after being modulated by the digital processing unit 302, the signal X₁ and the signal X₂ need to be transmitted by using a sub-band in a Y₅ direction of the antenna, and the modulated signal X₃ and the modulated signal X₅ need to be transmitted by using a sub-band in a Y₄ direction of the antenna. In this case, under the control of the control signal sent by the digital interface, the radio frequency switch switches the modulated signal X₁ and the modulated signal X₂ to a power combiner 5 that is corresponding to the sub-band corresponding to the Y₅ direction, and switches the modulated signal X₃ and the modulated signal X₅ to a power combiner 4 that is corresponding to the sub-band corresponding to the Y₄ direction. Then, the power combiner 5 combines the modulated signal X₁ and the modulated signal X₂ that need to be transmitted by using the sub-band corresponding to the Y₅ direction, that is, recombines and transmits the modulated signal X₁ and the modulated signal X₂ by using the sub-band corresponding to the Y₅ direction of the antenna. The power combiner 4 combines the analog signal X₃ and the analog signal X₅ that need to be transmitted by using the sub-band corresponding to the Y₄ direction, that is, recombines and transmits the analog signal X₃ and the analog signal X₅ by using the sub-band corresponding to the Y₄ direction of the antenna. It should be noted that only one direction of the antenna may be selected to transmit each modulated signal, but a sub-band in a same direction of the antenna may be selected to transmit different modulated signals.

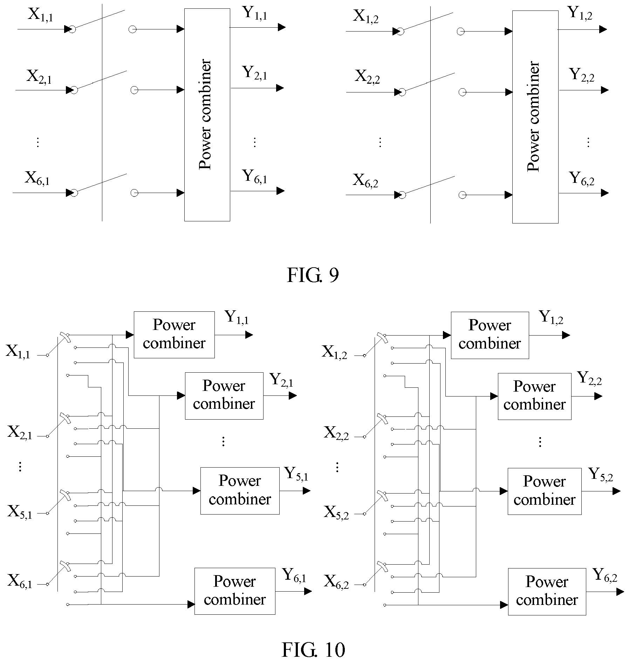

Optionally, in an embodiment of an implementation scenario in which there are two antennas, the radio frequency switch in the combiner unit 303 may be a single-pole single-throw switch shown in FIG. 9, and there are 12 radio frequency switches. Because there are two antennas, there are two power combiners. An input end of each single-pole single-throw switch is connected to one digital processing unit 302, and an output end of each single-pole single-throw switch is connected to one power combiner.

X_{i,j} indicates a signal in an i^{th} sub-band on a j^{th} antenna, where i=1, ..., or 6, and j=1 or 2. Y_{i,j} indicates a signal in an i^{th} sub-band on a j^{th} antenna, where i=1, ..., or 6, and j=1 or 2. Signals processed by a signal modulation unit 302 are X₁₁, X₁₂, X₂₁, X₂₂, X₃₁, X₃₂, ..., X₆₁, and X₆₂, where X₁₁, X₂₁, ..., and X₆₁ are transmitted by using a sub-band in any direction of a first antenna, and X₁₂, X₂₂, ..., and X₆₂ are transmitted by using a sub-band in any direction of a second antenna. It should be noted that each signal processed by the digital processing unit 302 can be allocated only to a sub-band in one direction of one antenna for transmission.

Specifically, in a scenario in which there are two antennas in the system, the total bandwidth of the system is divided into six sub-bands, and each sub-band corresponds to one digital processing unit. Therefore, the system has six digital processing units, 12 radio frequency switches, and two power combiners. An input end of each radio frequency switch is connected to one digital processing unit, and an output end of each radio frequency switch is connected to a corresponding power combiner. It is assumed that digital signals decomposed by the digital interface are X₁₁, X₁₂, X₁₁, X₂₂, X₃₂, and X₃₂, where X₁₁ indicates that the signal needs to be transmitted by using a sub-band in a first direction of a first antenna, X₁₂ indicates that the signal needs to be transmitted by using a sub-band in a first direction of a second antenna, X₂₂ indicates that the signal needs to be transmitted by using a sub-band in a second direction of the second antenna, and X₃₂ indicates that the signal needs to be transmitted by using a sub-band in a third direction of the second antenna. That is, for the signals processed by the digital processing unit, there are two signals that need to be transmitted by using the sub-band in the first direction of the first antenna, there is one signal that needs to be transmitted by using the sub-band in the first direction of the second antenna, there are two signals that need to be transmitted through the third direction of the second antenna, and there is one signal that needs to be transmitted through the second direction of the second antenna. Under the control of the control signal sent by the digital interface, the single-pole single-throw switch switches, to corresponding power combiners, the signals modulated by the digital processing unit, that is, switches X₁₁ to a power combiner corresponding to the first antenna, and switches X₁₂, X₂₂, and X₃₂ to a power combiner corresponding to the second antenna. Because there are two signals that need to be transmitted by using the sub-band in the first direction of the first antenna, the power combiner corresponding to the first antenna combines the two signals that need to be transmitted by using the sub-band in the first direction of the first antenna, and sends a combined signal to the first direction of the first antenna for transmission after the combined signal is up-converted, filtered, and amplified. Similarly, because there is one signal that needs to be transmitted by using the sub-band in the first direction of the second antenna, in this case, the power combiner corresponding to the second antenna does not need to perform combination processing, and the signal is directly sent to the first direction of the second antenna after being up-converted, filtered, and amplified. Because there is also one signal that needs to be transmitted by using the sub-band in the second direction of the second antenna, in this case, the power combiner corresponding to the second antenna does not need to perform combination processing, and the signal is directly sent to the first direction of the second antenna after being up-converted, filtered, and amplified. Because there are two signals that need to be transmitted by using the sub-band in the third direction of the second antenna, the power combiner corresponding to the second antenna combines the two signals that need to be transmitted by using the sub-band in the third direction of the second antenna, and sends a combined signal to the third direction of the second antenna for transmission after the combined signal is up-converted, filtered, and amplified.

Optionally, in another embodiment of an implementation scenario in which there are two antennas, the radio frequency switch in the combiner unit 303 may be a single-pole multi-throw switch shown in FIG. 10. There are 12 single-pole multi-throw switches, and there are 12 power combiners, that is, each direction of each antenna corresponds to one power combiner. An input end of each single-pole multi-throw switch is connected to six signal processing units, and an output end of each single-pole multi-throw switch is connected to 12 power combiners. X_{i,j} indicates a signal in a sub-band in an i^{th} direction on a j^{th} antenna, where i=1, ..., or 6, and j=1 or 2. Y_{i,j} indicates a signal in a sub-band in an i^{th} direction on a j^{th} antenna, where i=1, ..., or 6, and j=1 or 2. Each power combiner corresponds to a sub-band in one direction of each antenna.

For example, in a scenario in which there are two antennas in the system, the total bandwidth of the system is divided into six sub-bands, and each sub-band corresponds to one digital processing unit. Therefore, the system has six digital processing units, 12 radio frequency switches, and 12 power combiners. An input end of each radio frequency switch is connected to the six digital processing units, and an output end of each radio frequency switch is connected to 12 power combiners. It is assumed that digital signals decomposed by the digital interface unit are X₁₁, X₁₂, X₁₁, X₂₂, X₃₂, and X₃₂, where X₁₁ indicates that the signal needs to be transmitted by using a sub-band in a first direction of a first antenna, X₁₂ indicates that the signal needs to be transmitted by using a sub-band in a first direction of a second antenna, X₂₂ indicates that the signal needs to be transmitted by using a sub-band in a second direction of the second antenna, and X₃₂ indicates that the signal needs to be transmitted by using a sub-band in a third direction of the second antenna. That is, for the signals processed by the digital processing unit, there are two signals that need to be transmitted by using the sub-band in the first direction of the first antenna, there is one signal that needs to be transmitted by using the sub-band in the first direction of the second antenna, there are two signals that need to be transmitted through the third direction of the second antenna, and there is one signal that needs to be transmitted through the second direction of the second antenna. Under the control of the control signal sent by the digital interface, the single-pole multi-throw switch switches, to corresponding power combiners, the signals modulated by the digital processing unit, that is, switches X₁₁ to a power combiner corresponding to the sub-band in the first direction of the first antenna, switches X₁₂ to a power combiner corresponding to the sub-band in the first direction of the second antenna, switches X₂₂ to a power combiner corresponding to the sub-band in the second direction of the second antenna, and switches X₃₂ to a power combiner corresponding to the sub-band in the third direction of the second antenna. Because there are two signals that need to be transmitted by using the sub-band in the first direction of the first antenna, the power combiner corresponding to the sub-band in the first direction of the first antenna combines the two signals that need to be transmitted by using the sub-band in the first direction of the first antenna, and sends a combined signal to the first direction of the first antenna for transmission after the combined signal is up-converted, filtered, and amplified. Similarly, because there is one signal that needs to be transmitted by using the sub-band in the first direction of the second antenna, in this case, the power combiner corresponding to the first direction of the second antenna does not need to perform combination processing, and the signal is directly sent to the first direction of the second antenna after being up-converted, filtered, and amplified. Because there is also one signal that needs to be transmitted by using the sub-band in the second direction of the second antenna, in this case, the power combiner corresponding to the second direction of the second antenna does not need to perform combination processing, and the signal is directly sent to the first direction of the second antenna after being up-converted, filtered, and amplified. Because there are two signals that need to be transmitted by using the sub-band in the third direction of the second antenna, the power combiner corresponding to the sub-band in the third direction of the second antenna combines the two signals that need to be transmitted by using the sub-band in the third direction of the second antenna, and sends a combined signal to the third direction of the second antenna for transmission after the combined signal is up-converted, filtered, and amplified.

This embodiment of the present invention provides a signal processing communications system, where a digital interface first decomposes total bandwidth into multiple sub-bands, and then signals are sent to a combiner unit after being processed by a digital processing unit. The signals modulated by the digital processing unit are switched to a corresponding antenna by using a radio frequency switch in the combiner unit, then different signals in a sub-band in a same direction of the antenna are combined by using a power combiner in the combiner unit, and a combined signal is input to a sub-band corresponding to the antenna for transmission. Compared with a scenario in which there is one antenna, in a scenario in which there are two antennas, there are still six digital processing units. That is, with an increase in a quantity of antennas, there is no need to increase a quantity of digital processing units, so that base station costs and complexities can be reduced.

An embodiment of the present invention provides a base station, including the signal processing communications system involved in the foregoing embodiments corresponding to FIG. 2 to FIG. 10, and implementation principles and technical effects of the base station are similar. A digital interface in the base station first decomposes total bandwidth into multiple sub-bands, and then signals are sent to a combiner unit after being processed by a digital processing unit. The signals modulated by the digital processing unit are switched to a corresponding antenna by using a radio frequency switch in the combiner unit, then different signals in a sub-band in a same direction of the antenna are combined by using a power combiner in the combiner unit, and a combined signal is input to a sub-band corresponding to the antenna for transmission. Compared with a scenario in which there is one antenna in the base station, in a scenario in which there are two antennas in the base station, there are still six digital processing units. That is, with an increase in a quantity of antennas in the base station, there is no need to increase a quantity of digital processing units, so that base station costs and complexities can be reduced.

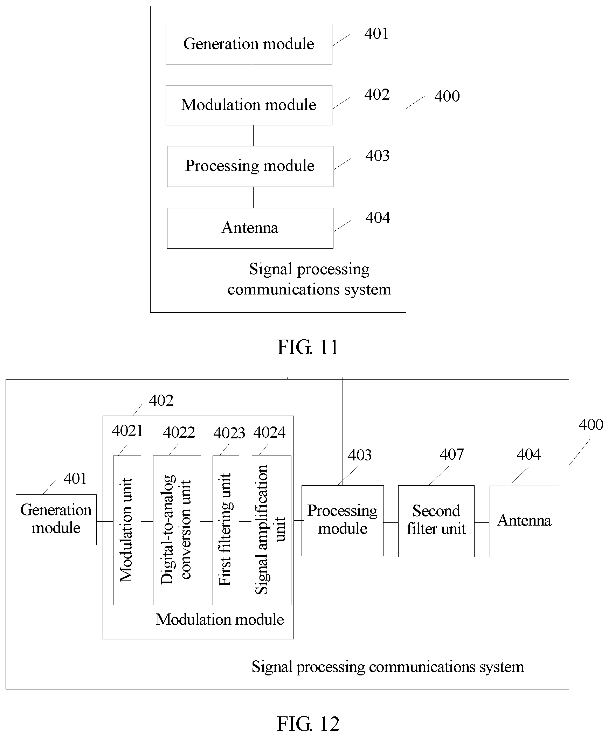

FIG. 11 is a schematic structural diagram of a signal processing communications system according to another embodiment of the present invention, where system bandwidth includes multiple sub-bands. As shown in FIG. 11, the signal processing communications system 400 includes a generation module 401, a modulation module 402, a processing module 403, and at least one antenna 404. The generation module 401 is configured to generate multiple baseband signals, where each baseband signal corresponds to one of the sub-bands; and is further configured to determine a sub-band corresponding to each antenna 404 and output a control signal to the processing module 403. The modulation module 402 is configured to separately modulate the multiple baseband signals generated by the generation module 401, where a modulated signal is obtained after each baseband signal is modulated. The processing module 403 is configured to: according to the control signal sent by the generation module 401, superimpose modulated signals that are corresponding to one or more sub-bands and obtained by the modulation module 402, and input a superimposed modulated signal to a corresponding antenna 404. The antenna 404 is configured to transmit the modulated signal output by the processing module 403.

Further, as shown in FIG. 12, the modulation module 402 in the foregoing signal processing communications system 400 includes:
a modulation unit 4021, configured to separately modulate the multiple baseband signals generated by the generation module 401, where a modulated signal is obtained after each baseband signal is modulated; and
a digital-to-analog conversion unit 4022, configured to perform digital-to-analog conversion on the modulated signal, so as to obtain an analog signal.

Further, as shown in FIG. 12, the modulation module 402 in the foregoing signal processing communications system 400 further includes:
a first filtering unit 4023, configured to perform filtering on the analog signal obtained by the analog-to-digital conversion unit 4022, so as to obtain a first filtered signal; and
a signal amplification unit 4024, configured to amplify the first filtered signal obtained by the first filtering unit 4023.

Further, the foregoing signal processing communications apparatus 400 further includes: a second filtering unit 407, configured to perform filtering on the signal that is obtained by superimposing the modulated signals corresponding to one or more sub-bands and that is output by the processing module 403, and input a filtered signal to the corresponding antenna 404.

This embodiment of the present invention provides a signal processing communications system. A generation module first generates multiple baseband signals, where each baseband signal corresponds to one sub-band; and is further configured to determine a sub-band corresponding to each antenna and output a control signal to a processing module. Then, a modulation module separately modulates the baseband signals that are generated by the generation module, where a modulated signal is obtained after each baseband signal is modulated. Further, according to the control signal sent by the generation module, the processing module superimposes modulated signals that are corresponding to one or more sub-bands and obtained by the modulation module, and inputs a superimposed modulated signal to a corresponding antenna. Finally, the antenna transmits the modulated signal output by the processing module. The processing module superimposes the modulated signals that are corresponding to one or more sub-bands and obtained by the modulation module, and inputs the superimposed modulated signal to the corresponding antenna. In addition, with an increase in a quantity of antennas, there is no need to increase a quantity of modulation modules, so that base station costs and complexities can be reduced.

Another embodiment of the present invention provides a base station, including the signal processing communications system involved in the foregoing embodiments corresponding to FIG. 11 to FIG. 12, and implementation principles and technical effects of the base station are similar. A generation module in the base station first generates multiple baseband signals, where each baseband signal corresponds to one sub-band; and is further configured to determine a sub-band corresponding to each antenna and output a control signal to a processing module in the base station. Then, a modulation module separately modulates the baseband signals generated by the generation module in the base station, where a modulated signal is obtained after each baseband signal is modulated. Further, according to the control signal sent by the generation module, the processing module superimposes modulated signals that are corresponding to one or more sub-bands and obtained by the modulation module, and inputs a superimposed modulated signal to a corresponding antenna. Finally, the antenna transmits the modulated signal output by the processing module. The processing module in the base station superimposes the modulated signals that are corresponding to one or more sub-bands and obtained by the modulation module, and inputs the superimposed modulated signal to the corresponding antenna. In addition, with an increase in a quantity of antennas in the base station, there is no need to increase a quantity of modulation modules in the base station, so that base station costs and complexities can be reduced.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A signal processing apparatus, comprising a radio frequency switch and a power combiner, wherein
the radio frequency switch is configured to close under the control of a control signal sent by a digital interface, so that a digital processing unit is connected to the power combiner, and modulated signals that are corresponding to one or more sub-bands and obtained by the digital processing unit are input to the power combiner; and
the power combiner is configured to superimpose the modulated signals that are corresponding to one or more sub-bands and output by the radio frequency switch, and input a superimposed modulated signal to a corresponding antenna.

2. The apparatus according to claim 1, wherein there is one antenna, and there is one power combiner; and
the radio frequency switch comprises multiple single-pole single-throw switch components, wherein an input end of each single-pole single-throw switch component is connected to the digital processing unit, and an output end of each single-pole single-throw switch component is connected to the power combiner.

3. The apparatus according to claim 1, wherein there is one antenna, and there are multiple power combiners; and
the radio frequency switch comprises multiple single-pole multi-throw switch components, wherein an input end of each single-pole multi-throw switch component is connected to the digital processing unit, and each output end of each single-pole multi-throw switch component is connected to the multiple power combiners.

4. The apparatus according to claim 1, wherein there are at least two antennas, and each antenna corresponds to one power combiner; and
the radio frequency switch comprises multiple single-pole single-throw switch components, wherein an input end of each single-pole single-throw switch component is connected to the digital processing unit, and an output end of each single-pole single-throw switch component is connected to the power combiner corresponding to the signal modulation unit.

5. The apparatus according to claim 1, wherein there are at least two antennas, and each antenna corresponds to multiple power combiners; and
the radio frequency switch comprises multiple single-pole multi-throw switch components, wherein an input end of each single-pole multi-throw switch component is connected to the digital processing unit, and an output end of each single-pole multi-throw switch component is connected to multiple power combiners corresponding to the signal modulation unit.

6. A signal processing communications system, wherein system bandwidth comprises multiple sub-bands, and the system comprises: a digital interface, at least one digital processing unit, a combiner unit, and at least one antenna, wherein
the digital interface is configured to generate multiple baseband signals, wherein each baseband signal corresponds to one of the sub-bands; and is further configured to determine a sub-band corresponding to each antenna and output a control signal to the combiner unit;
the digital processing unit is configured to separately modulate the multiple baseband signals generated by the digital interface, wherein a modulated signal is obtained after each baseband signal is modulated;
the combiner unit is configured to: according to the control signal sent by the digital interface, superimpose modulated signals that are corresponding to one or more sub-bands and obtained by the digital processing unit, and input a superimposed modulated signal to a corresponding antenna; and
the antenna is configured to transmit the modulated signal output by the combiner unit.

7. The system according to claim 6, wherein the combiner unit comprises:
a radio frequency switch, configured to close under the control of the control signal sent by the digital interface, so that the digital processing unit is connected to the power combiner, and the modulated signals that are corresponding to one or more sub-bands and obtained by the digital processing unit are input to the power combiner; and
the power combiner, configured to superimpose the modulated signals that are corresponding to one or more sub-bands and output by the radio frequency switch, and input the superimposed modulated signal to the corresponding antenna.

8. The system according to claim 7, wherein the system comprises one antenna, and there is one power combiner; and
the radio frequency switch comprises multiple single-pole single-throw switch components, wherein an input end of each single-pole single-throw switch component is connected to the digital processing unit, and an output end of each single-pole single-throw switch component is connected to the power combiner.

9. The system according to claim 7, wherein the system comprises one antenna, and there are multiple power combiners; and
the radio frequency switch comprises multiple single-pole multi-throw switch components, wherein an input end of each single-pole multi-throw switch component is connected to the digital processing unit, and each output end of each single-pole multi-throw switch component is connected to the multiple power combiners.

10. The system according to claim 7, wherein the system comprises at least two antennas, and each antenna corresponds to one power combiner; and
the radio frequency switch comprises multiple single-pole single-throw switch components, wherein an input end of each single-pole single-throw switch component is connected to the digital processing unit, and an output end of each single-pole single-throw switch component is connected to the power combiner corresponding to the signal modulation unit.

11. The system according to claim 7, wherein the system comprises at least two antennas, and each antenna corresponds to multiple power combiners; and
the radio frequency switch comprises multiple single-pole multi-throw switch components, wherein an input end of each single-pole multi-throw switch component is connected to the digital processing unit, and an output end of each single-pole multi-throw switch component is connected to multiple power combiners corresponding to the signal modulation unit.

12. The system according to any one of claims 6 to 11, wherein the digital processing unit comprises:
a field-programmable gate array FPGA component, configured to separately modulate the multiple baseband signals generated by the digital interface, wherein a modulated signal is obtained after each baseband signal is modulated; and
a digital-to-analog conversion component, configured to perform digital-to-analog conversion on the modulated signal, so as to obtain an analog signal.

13. The system according to claim 12, further comprising:
a first band pass filter BPF component, configured to perform filtering on the analog signal obtained by the analog-to-digital conversion component, so as to obtain a first filtered signal; and
a signal amplifier, configured to amplify the first filtered signal obtained by the first BPF component.

14. The system according to any one of claims 6 to 13, further comprising a second BPF component, wherein
the second BPF component is configured to perform filtering on the signal that is obtained by superimposing the modulated signals corresponding to one or more sub-bands and that is output by the combiner unit, and input a filtered signal to the corresponding antenna.

15. Abase station, comprising the system according to any one of claims 6 to 14.

16. A signal processing communications system, wherein system bandwidth comprises multiple sub-bands, and the system comprises: a generation module, a modulation module, a processing module, and at least one antenna, wherein
the generation module is configured to generate multiple baseband signals, wherein each baseband signal corresponds to one of the sub-bands; and is further configured to determine a sub-band corresponding to each antenna and output a control signal to the processing module;
the modulation module is configured to separately modulate the multiple baseband signals generated by the generation module, wherein a modulated signal is obtained after each baseband signal is modulated;
the processing module is configured to: according to the control signal sent by the generation module, superimpose modulated signals that are corresponding to one or more sub-bands and obtained by the modulation module, and input a superimposed modulated signal to a corresponding antenna; and
the antenna is configured to transmit the modulated signal output by the processing module.

17. The system according to claim 16, wherein the modulation module comprises:
a modulation unit, configured to separately modulate the multiple baseband signals generated by the generation module, wherein a modulated signal is obtained after each baseband signal is modulated; and
a digital-to-analog conversion unit, configured to perform digital-to-analog conversion on the modulated signal, so as to obtain an analog signal.

18. The system according to claim 17, further comprising:
a first filtering unit, configured to perform filtering on the analog signal obtained by the digital-to-analog conversion unit, so as to obtain a first filtered signal; and
a signal amplification unit, configured to amplify the first filtered signal obtained by the filtering unit.

19. The system according to any one of claims 16 to 18, further comprising a second filtering unit, wherein
the second filtering unit is configured to perform filtering on the signal that is obtained by superimposing the modulated signals corresponding to one or more sub-bands and that is output by the processing module, and input a filtered signal to the corresponding antenna.

20. A base station, comprising the system according to any one of claims 16 to 19.
